# FASCICULE DE BREVET EUROPEEN

(11) **EP 2 407 031 B1**
(45) Date de publication et mention de la délivrance du brevet: **03.04.2013**
(21) Numéro de dépôt: 11005711.4
(22) Date de dépôt: 13.07.2011
(51) Int. Cl.: A23G 1/21, A23G 3/02, B29C 41/14, B29C 41/46

(54) **Dispositif de moulage de coquilles creuses par figeage thermique**
Vorrichtung zum Formen von Hohlschalen durch thermisches Erstarren
Device for hollow shell moulding by thermal setting

(30) Priorité: 13.07.2010 FR 1002956
(43) Date de publication de la demande: 18.01.2012
(73) Titulaire: PROCITECH, 41000 Villebarou (FR)
(72) Inventeur: Housset, Alain, 41000 Villebarou (FR)
(74) Mandataire: Thibon, Norbert

(56) Documents cités:
- WO-A1-2004/034800
- FR-A1- 2 604 651
- FR-A1- 2 764 779
- GB-A- 207 974

## Description

L'invention se rapporte au domaine des installations de moulage de coquilles creuses par trempage dans un bain de matière fondue.

Afin de former des coquilles creuses de chocolat à garnir par la suite par un artisan chocolatier, on utilise couramment, dans des installations de moulage, des moules à tremper dans le chocolat qui sont associés à un dispositif de refroidissement pour rendre et maintenir les moules plus froids que le chocolat afin que ce dernier se fige autour de chaque moule lors du trempage. Le chocolat se solidifie ainsi au contact de la matière du moule plus froide et une coquille creuse solide se forme autour de la forme extérieure du moule. Les moules sont ensuite amenés au-dessus d'un tapis convoyeur et l'éjection de la coquille est réalisée par un apport d'air comprimé dans le moule. L'air est disposé à ressortir du moule par des petits trous disposés à l'extrémité de celui-ci, dégageant la coquille en chocolat à distance du moule.

Le refroidissement du moule est ici particulièrement important en ce qu'il détermine d'une part la qualité des coquilles creuses formées et d'autre part la vitesse à laquelle ces coquilles peuvent être réalisées. Plus la différence de température est importante entre la température du moule et la température du chocolat au moment du trempage de l'un dans l'autre, plus vite le chocolat va se figer sur le moule permettant de la sorte que la forme de la coquille soit sans défaut.

Plus particulièrement, dans le document FR 2 764 779, on prévoit une installation de moulage de coquilles en chocolat dans laquelle le refroidissement nécessaire au figeage du chocolat est réalisé par la circulation d'un fluide réfrigérant à l'intérieur des moules et notamment dans l'embout, ce dernier constituant la partie d'extrémité du moule qui est destinée à être trempée dans le chocolat.

Dans ce type d'installation, que l'on peut également retrouver dans le document WO 2004/034800, les moules sont formés en saillie d'un support qui leur est commun, pour pouvoir être plongés dans le chocolat. A l'intérieur du support, il est prévu un circuit de refroidissement qui communique avec le volume interne de chaque moule pour y faire circuler un liquide réfrigérant visant à refroidir chaque moule poinçon par contact du liquide sur les parois internes du poinçon pour provoquer le figeage du chocolat. On observe que le refroidissement par convection du moule prévu dans l'art antérieur est lent.

L'invention propose d'utiliser comme liquide réfrigérant le fluide caloporteur d'un circuit à effet caloduc. On prévoit ainsi un refroidissement avantageux qui n'impose pas, comme cela est prévu dans l'art antérieur, des temps de pause dans le cycle uniquement destinés à refroidir les après qu'ils aient été chauffés par le contact avec le chocolat, pour qu'ils soient à la température voulue pour le trempage suivant. Ces temps de pause non masqués sont évidemment une perte de rendement dans la production de coquilles. On peut alors être obligé de disposer une plaque froide sous le tapis de convoyage sur lequel sont déposées les coquilles en chocolat, pour faciliter le refroidissement lors du contact des moules sur le tapis.

Dans ce contexte, l'invention propose un dispositif de moulage de coquilles creuses par figeage thermique de matière fondue sur au moins un embout, dans lequel l'embout est refroidi pour son trempage dans une matière fondue, caractérisé en ce que le dispositif comporte un tube auquel l'embout est rendu solidaire, ledit tube et ledit embout formant une enceinte à effet caloduc qui renferme en circuit fermé un fluide caloporteur en équilibre entre deux extrémités opposées de l'enceinte formant respectivement évaporateur et condenseur du caloduc, dans lequel l'évaporateur est formé par l'embout à tremper dans la matière fondue.

Le fait que le poinçon soit formé d'une enceinte à effet caloduc et que ce soit l'embout qui forme l'évaporateur de l'enceinte à effet caloduc permet d'assurer un refroidissement par évaporation et centré sur l'embout qui est la pièce du poinçon directement au contact avec la matière fondue à figer. On obtient ainsi, par un système simple et propre à chaque poinçon, un moyen de refroidissement de l'embout particulièrement efficace.

Selon une caractéristique de l'invention, des ailettes radiales sont disposées en saillie sur la surface extérieure du tube dans la partie d'extrémité formant le condenseur, chaque ailette présentant une forme annulaire entourant le tube.

Comme cela sera décrit ci-après, l'installation de moulage qui comprend le poinçon selon l'invention comporte un circuit de refroidissement et le tube est disposé en partie dans ce circuit de refroidissement. Le fait d'avoir des ailettes qui s'étendent en saillie radiale autour de la surface extérieure du tube permet d'avoir une plus grande surface de contact et d'échange avec l'air froid qui circule dans le circuit de refroidissement de sorte que le refroidissement du poinçon effectué par effet caloduc à l'autre extrémité du tube en est amélioré.

Selon différentes caractéristiques de l'invention, l'embout comporte une paroi d'extrémité transversale et une paroi latérale circulaire qui délimitent au centre de l'embout un évidement formant une chambre de refroidissement. La chambre de refroidissement est formé par un alésage de diamètre donné et un lamage réalisé à proximité du bord débouchant de l'alésage, à l'opposé de la paroi d'extrémité, ledit lamage formant un logement apte à recevoir et former épaulement pour l'extrémité du tube sur lequel l'embout est fixé de manière étanche. Ainsi, le fluide caloporteur en équilibre avec sa vapeur d'une extrémité à l'autre du tube s'évapore dans son extrémité chaude au niveau de la chambre de refroidissement de l'embout qui ferme de façon étanche le tube. L'évaporation est effectuée directement au contact des parois de l'embout qui sont amenés à supporter sur leur surface extérieure la matière chaude figée.

L'embout comporte des canaux de distribution qui sont répartis angulairement de façon régulière dans l'épaisseur de la paroi latérale de l'embout, lesdits canaux débouchant sur des orifices d'éjection d'air comprimé du côté de la paroi d'extrémité de l'embout. Une bague de protection enserre le tube sur toute sa hauteur entre l'embout et les ailettes, ladite bague comportant des entrées d'air radiales débouchant extérieurement au poinçon à l'air libre et intérieurement dans une chambre de distribution aménagée circulairement dans l'épaisseur du poinçon, de sorte que l'extrémité opposée à l'orifice de chaque canal de distribution débouche dans ladite chambre de distribution. Ainsi, le passage d'air comprimé se fait dans le volume du poinçon entre la bague de protection et la paroi d'extrémité de l'embout, sans passer par l'intérieur du tube ou par la chambre de refroidissement, comme cela peut être le cas dans l'art antérieur. Le circuit d'air comprimé ne dérange pas l'équilibre du fluide et l'effet caloduc qui en résulte et qui est utilisé pour le refroidissement de l'embout.

L'invention concerne également une installation de moulage pour l'obtention de coquilles creuses, dans lequel un embout est mobile en translation pour passer d'une position de prise dans une trémie remplie de matière fondue à une position de dépose sur un tapis convoyeur sur lequel la coquille formée autour de l'embout dans la position de prise est éjectée par de l'air comprimé, caractérisée en ce qu'elle comporte au moins un poinçon tel que décrit précédemment, ainsi qu'un circuit de refroidissement, et en ce que l'embout forme l'extrémité chaude de l'enceinte à effet caloduc du fait du dégagement thermique de la matière fondue qui se fige autour du poinçon et qui transmet sa chaleur directement par contact sur l'embout, tandis que l'extrémité froide de l'enceinte à effet caloduc est placé dans le circuit de refroidissement.

Selon une caractéristique de l'invention, le poinçon est fixé à un support comportant un conduit interne, qui est partie du circuit de refroidissement et qui reçoit l'extrémité froide de l'enceinte à effet caloduc. Cette disposition permet de maintenir à basse température l'extrémité froide de l'enceinte à effet caloduc pour que la vapeur du fluide en équilibre dans le tube continue à se condenser dans cette zone froide.

Selon des caractéristiques de l'invention, le support et les poinçons associés sont mobiles en translation dans une direction horizontale par l'intermédiaire d'un vérin pneumatique et dans une direction verticale par l'intermédiaire d'un moteur linéaire, ledit vérin pneumatique et ledit moteur linéaire étant pilotés par une machine à commande numérique de ladite installation. Comme cela sera.décrit plus tard, le déplacement de l'ensemble dans la direction verticale est avantageusement réalisé en deux temps, ce qui est rendu plus facile par le pilotage par un moteur linéaire. Le support est relié à un bloc frigorifique par des gaines souples. Ces gaines souples forment des conduits du circuit de refroidissement et leur utilisation permet le déplacement de l'ensemble formé par le support et les poinçons associés par rapport au bloc frigorifique qui reste fixe.

Selon une caractéristique de l'invention, le circuit d'air comprimé est monté en dérivation du circuit de refroidissement, de sorte que l'air qui est amené à passer dans un compresseur avant d'être délivré vers les poinçons pour l'éjection de chocolat est initialement refroidi.

Ainsi, l'air éjecté sur le chocolat est froid et facilite l'éjection de la coquille de matière chaude. En outre, le passage d'air comprimé froid dans les parois de l'embout participe au refroidissement de l'embout. On observe que dans l'art antérieur, l'air utilisé pour le démoulage des coquilles est distinct du fluide réfrigérant.

Un dispositif pour tempérer la matière fondue adaptée à brasser et à maintenir ladite matière à température dans un volume de stockage est muni de flexibles de raccordement pour assurer le déplacement de la matière vers la trémie, et il comporte une vanne commandée par une machine à commande numérique pour bloquer l'arrivée de matière fondue vers la trémie.

L'utilisation de cette vanne pour bloquer le flux de matière arrivant dans la trémie permet d'assurer que la matière présente dans la trémie au moment du trempage des poinçons n'est pas agitée et que la surface est lisse. Dans le cas contraire, une arrivée continue de matière pourrait provoquer un reflux par le contact de la matière contre le bord de la trémie et provoquer des formes de coquilles creuses impactées par ce mouvement de la matière.

D'autres caractéristiques et avantages de l'invention ressortiront plus précisément de la description qui suit, description illustrée par les figures suivantes :
- la figure 1, qui est une représentation schématique d'une installation de fabrication de coquilles de chocolat garnies, avec de gauche à droite un dispositif pour tempérer le chocolat, une trémie dans laquelle le chocolat tempéré est versé en continu, un poste de poinçonnage avec un dispositif de refroidissement des poinçons et un dispositif d'éjection de coquilles associés, et un convoyeur sur lequel les coquilles moulées sont disposées puis garnies ;
- la figure 2, qui est une représentation schématique du principe de fonctionnement selon l'invention du dispositif de refroidissement des poinçons du poste de poinçonnage ;
- la figure 3, qui est une vue en perspective d'un poinçon selon l'invention ;
- la figure 4, qui est une vue selon un plan de coupe vertical du poinçon de la figure 3 ;
- la figure 5, qui est une vue en coupe du poinçon illustré à la figure 3, tel que monté dans le poste de poinçonnage, avec la partie inférieure du dispositif de refroidissement associé, le poinçon étant ici dans une position de dépose en regard du convoyeur ;
- la figure 6, qui est une vue semblable à la figure 5, avec le poinçon qui est dans une position de prise, en train de tremper dans la trémie pleine de chocolat ;
- la figure 7, qui est une vue en coupe de l'embout du poinçon de la figure 3 ;
- la figure 8 qui est une vue de dessus de l'embout tel qu'illustré sur la figure 7 ;
- la figure 9 qui est une vue de trois quart arrière d'un mode de réalisation de l'installation illustrée schématiquement sur la figure 1 ;
- et la figure 10, qui est une vue en élévation de l'installation illustrée sur la figure 9.

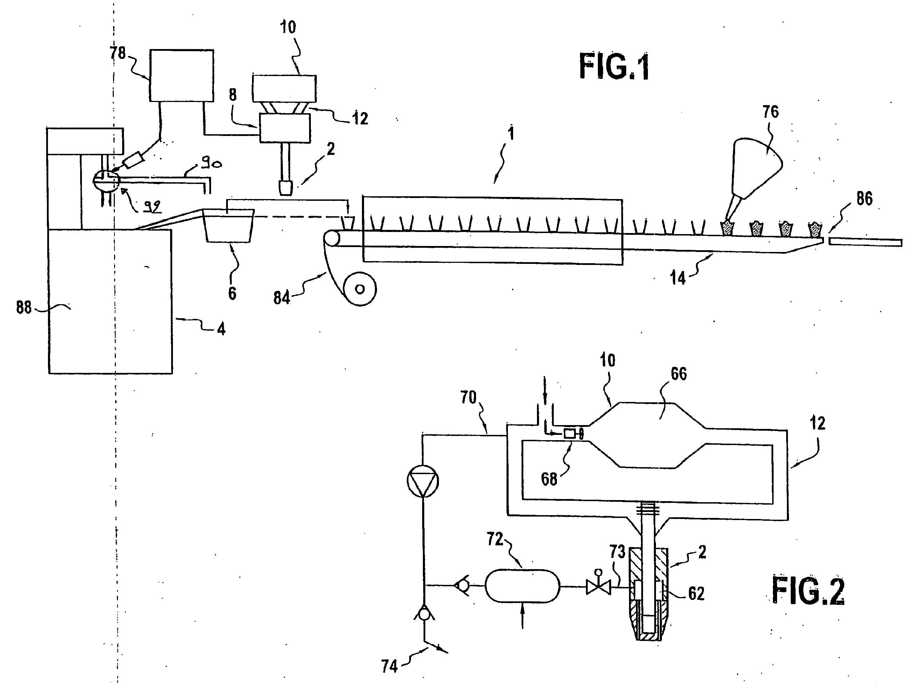

Comme illustré sur les figures, et notamment de façon schématique sur la figure 1, une installation de moulage 1 selon l'invention est prévue pour permettre des cycles de trempage de poinçons 2 dans un bain de matière fondue. Dans la description qui va suivre, l'exemple va être pris du chocolat pour la réalisation de coquilles creuses en chocolat prêtes à être garnies par un artisan. Elle comporte un dispositif pour tempérer le chocolat 4, également appelé tempéreuse, dans lequel le chocolat est amené et maintenu à une température déterminée pour être ensuite disposé dans une trémie 6 dans laquelle les poinçons sont adaptés à tremper pour que le chocolat se fige sur leur pourtour. Elle comporte également un bloc principal comportant un poste de poinçonnage 8 portant les poinçons et permettant leur déplacement depuis la trémie vers un convoyeur, ainsi qu'un bloc frigorifique 10, le poste de poinçonnage et le bloc frigorifique étant reliés par un circuit de refroidissement 12. Elle comporte enfin un tapis convoyeur 14 sur iequei les poinçons sont adaptés à reposer pour la dépose par éjection du chocolat figé sur leur pourtour.

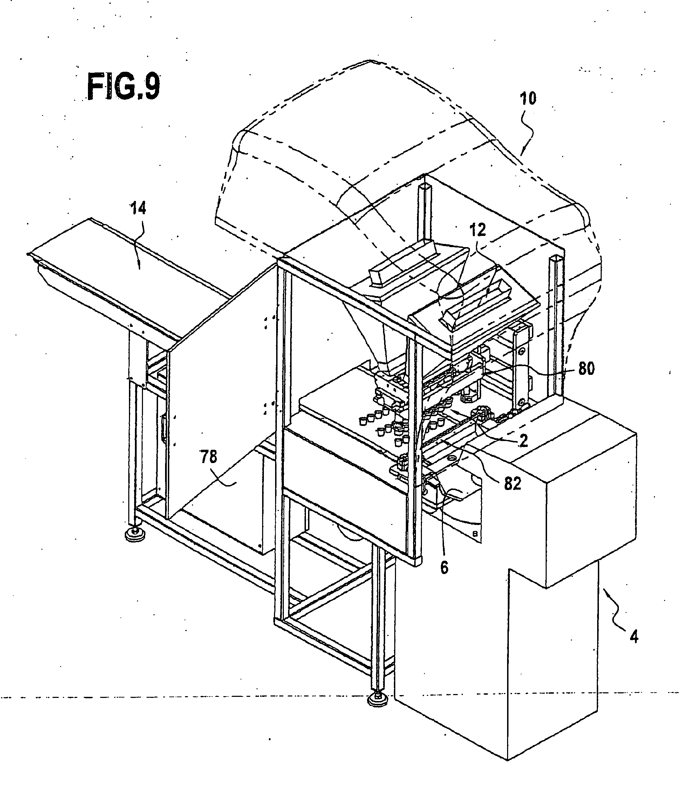

Le poste de poinçonnage comporte une série de poinçons .2 alignés ici verticalement et fixés sur un support multifonction 16 adapté notamment à porter les poinçons, à permettre leur déplacement entre la trémie et le tapis convoyeur ainsi qu'à former partie du circuit de refroidissement pour que l'extrémité supérieure des poinçons soit positionnée dans ce circuit de refroidissement. Comme cela est visible sur la figure 9, le nombre de poinçons en ligne peut être de huit, mais il sera compris que leur nombre peut varier sans sortir du contexte de l'invention.

Le support 16 comporte un bloc de guidage 18 de forme parallélépipédique et un diffuseur 20 cylindrique creux qui est monté à une extrémité dudit bloc de guidage et qui s'étend sur toute la longueur du bloc.

Le bloc de guidage comporte des alésages sur toute sa hauteur adaptés à recevoir des poinçons. La longueur du bloc est déterminée pour que le nombre voulu de poinçons puisse être aligné dans le sens de la longueur du bloc. Pour chaque alésage, un conduit transversal 65 est réalisé dans le bloc de guidage pour déboucher dans l'alésage.

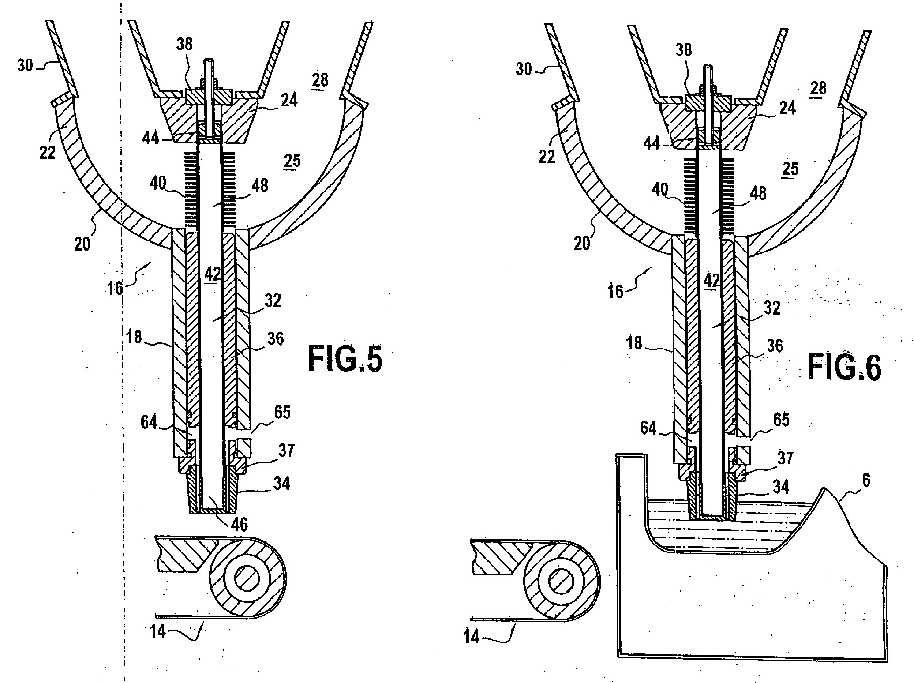

Le diffuseur présente une forme générale de demi-fût qui comporte un demi-cylindre creux 22 avec des parois d'extrémités transversales et un noyau intérieur 24, de sorte qu'un conduit interne 26 est délimité entre le noyau intérieur et les parois internes du demi-cylindre. Comme cela est visible sur les figures 5 et 6, ce conduit interne présente en section dans un plan vertical une forme de demi-cercle. Deux ouvertures 28 sont ainsi réalisées de part et d'autre du noyau, sur toute la longueur du diffuseur. Comme cela sera décrit ci-après, le conduit interne va être une partie du circuit de refroidissement de l'invention et une gaine souple 30 va être fixée au niveau de chacune des ouvertures de part et d'autre du noyau.

Les alésages formés dans le bloc de guidage débouchent dans le diffuseur, sous le noyau central, pour laisser passage à l'extrémité libre des poinçons adaptés à être fixés au noyau du diffuseur, et à être suspendus verticalement sous ce noyau. On observe ici que chaque poinçon peut être fixé indépendamment des autres par le dessous du support et donc que chaque poinçon est facilement interchangeable. Ceci présente notamment l'avantage pour un artisan chocolatier de pouvoir modifier à volonté les formes de coquilles creuses souhaitées. Ceci présente également l'avantage de pouvoir remplacer uniquement un poinçon défectueux pour maintenance sans changer l'ensemble des poinçons, voir même de procéder à la maintenance du poinçon tout en relançant l'installation avec un poinçon de moins, le fonctionnement de l'installation n'étant alors pas altéré.

Chaque poinçon 2 comporte un tube 32 et un embout 34 soudé à une extrémité proximale du tube ainsi que deux demi-coques 36 qui enserrent la partie centrale du tube. L'extrémité distale du tube est fixée au support par un système vis-écrou. Chaque poinçon est logé dans un alésage du bloc de guidage partie du support et il s'étend dans le bloc de guidage de sorte que l'embout du poinçon dépasse du bloc.

A proximité de l'extrémité distale du tube, des ailettes 40 prolongent radialement la surface extérieure du tube, chaque ailette présentant une forme annulaire entourant le tube. La dimension radiale des ailettes est choisie la plus grande possible pour augmenter la surface d'échange tout en restant inférieure au diamètre de l'alésage prévu dans le bloc de guidage, pour que les poinçons puissent passer dans ces alésages étant compris comme cela sera expliqué par la suite que lors de la mise en place de chaque poinçon dans le bloc de guidage du support, les ailettes sont amenées à être insérées les premières dans l'alésage.

Selon l'invention, l'extrémité proximale du tube est solidaire de l'embout. Un fluide caloporteur est diffusé à l'intérieur du tube, le fluide étant enfermé dans le tube par un moyen d'étanchéité à bouchon 44, de sorte que ce fluide peut circuler de manière naturelle entre le moyen d'étanchéité et l'embout. Par exemple, on réalise l'étanchéité par bouchon 44 en faisant se dilater une bille en place lors de l'injection du fluide, dès que tout le fluide est passé à l'intérieur du tube.

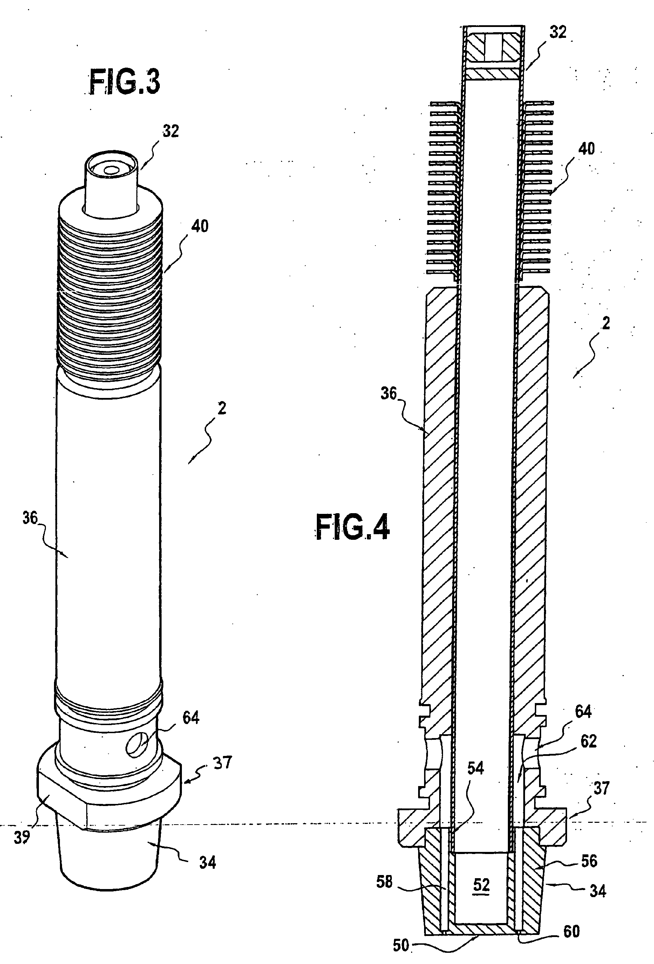

Le tube et l'embout, comme cela est visible sur la figure 3, forment alors selon l'invention une enceinte à effet caloduc, c'est à dire une enceinte étanche qui contient un liquide caloporteur en équilibre avec sa vapeur entre les deux extrémités du tube formant l'une une zone chaude et l'autre une zone froide. Dans la zone chaude 46, appelée également évaporateur, le liquide s'évapore à l'intérieur du tube et la vapeur circule dans le tube depuis l'évaporateur vers la zone froide 48, appelée également condenseur. La vapeur se condense alors sur les parois de la zone froide et le condensât est ramené depuis le condenseur vers l'évaporateur le long des parois du tube, à contre courant de l'écoulement de vapeur. Comme c'est le cas ici, le caloduc peut être assisté par la gravité du fait de la position verticale du poinçon de sorte que le condensât est ramené plus vite vers l'évaporateur par l'effet de gravité.

On comprendra que le parcours de la vapeur et du condensât entre la zone chaude et la zone froide pourrait être encadré par des circuits à l'intérieur du tube afin de s'assurer que l'écoulement de l'un ne gêne pas l'écoulement de l'autre en sens opposé. Dans le mode de réalisation représenté, le tube est avantageusement un tube mince qui favorise le retour par capillarité du condensât tandis que la vapeur remonte au centre du tube. Dans tous les cas, le fluide circule de manière naturelle. La circulation du fluide de refroidissement directement au contact des embouts n'est pas forcée, contrairement à ce qui est connu dans l'art antérieur.

Dans l'application de l'effet caloduc à un poinçon de formage de coquille de chocolat, la zone chaude correspond ici à l'extrémité proximale formée par l'embout et qui est destinée à plonger dans le chocolat chaud, tandis que la zone froide correspond à l'extrémité distale du poinçon présentant les ailettes et qui est destinée, lorsque le poinçon est fixé à demeure sur le support, à être positionné dans le conduit interne du diffuseur qui fait partie du circuit de refroidissement. Il sera compris que si l'extrémité froide du caloduc qui est disposée dans le circuit de refroidissement comporte avantageusement des ailettes pour améliorer le rendement du refroidissement par l'accroissement de la surface d'échange, le refroidissement des poinçons par l'effet vaporisant de l'enceinte à effet caloduc selon l'invention peut toutefois fonctionner sans ailettes.

On observe ainsi que selon l'invention, l'embout 34 forme la zone chaude 46 de l'encéinte à effet caloduc du fait du dégagement thermique du chocolat qui se fige autour du poinçon et qui transmet sa chaleur directement par contact sur l'embout, l'embout devenant plus chaud que le reste du tube. Le condensât de l'enceinte à effet caloduc vient réfrigérer l'embout chaud par vaporisation avant que cette vapeur ne se déplace vers le condenseur placé dans un circuit de refroidissement pour aller chercher la fraîcheur, et ce de façon ininterrompue.

On a ainsi un refroidissement de l'embout du poinçon par évaporation d'air froid à chaque cycle, cette fraîcheur étant alors disséminée dans l'ensemble des parois de l'embout et notamment celles au contact du chocolat.

L'embout présente un contour extérieur cylindrique, carré ou en étoile selon les besoins de l'artisan quant à la forme finale de la coquille en chocolat qui va épouser le contour extérieur de l'embout, mais cet embout présente une forme intérieure creuse qui est toujours la même et qui permet la solidarisation du tube avec l'embout de manière étanche. Ici, l'embout est brasé sur le tube au niveau d'un lamage 54, mais on comprendra que l'embout et le tube peuvent indifféremment être collés ou encore, par exemple, que le tube peut être serti par déformation à la chaleur à l'intérieur de l'embout.

Comme cela est visible sur les figures 4 à 7, l'embout est évidé en son centre jusqu'à une paroi d'extrémité 50 formant le fond d'une chambre de refroidissement 52. Cette chambre de refroidissement est formée par un alésage de diamètre donné et le lamage 54 est réalisé à proximité du bord débouchant de l'alésage, à l'opposé de la paroi d'extrémité. Le lamage présente un diamètre et une profondeur donnés pour former un logement apte à recevoir et former épaulement pour l'extrémité proximale du tube. Le tube et l'embout sont fixés de manière étanche, ici brasés, dans cette zone de lamage. Comme cela sera décrit ci-après, d'autre mode de fixation étanche du tube et de l'embout sont prévus. On observe donc que la chambre de refroidissement communique directement avec le tube et que l'ensemble est étanche. Le fluide disposé à l'intérieur de l'enceinte à effet caloduc est en équilibre entre la bille d'étanchéité 44 et la paroi d'extrémité 50.

L'embout comporte une paroi latérale circulaire 56, d'épaisseur radiale donnée, qui part en saillie de la paroi d'extrémité, d'épaisseur axiale donnée. On observe que l'épaisseur de la paroi d'extrémité est inférieure à l'épaisseur de la paroi latérale.

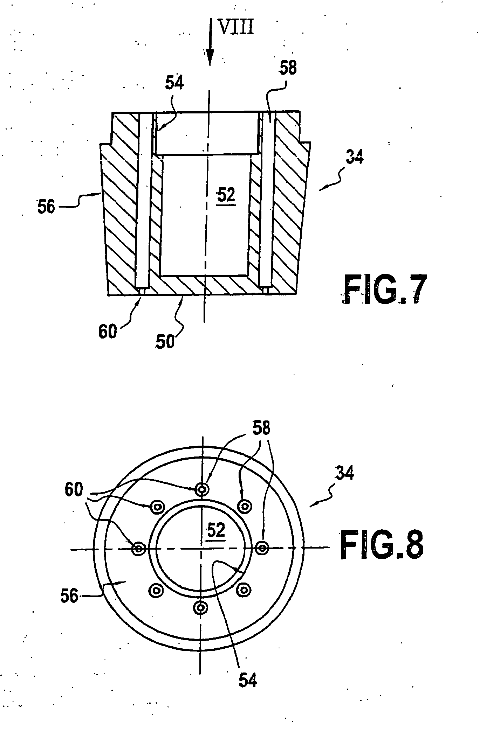

Des canaux de distribution 58 sont disposés axialement dans l'épaisseur radiale de la paroi circulaire de l'embout, ces canaux étant répartis régulièrement sur tout le tour de l'embout (figure 8). Dans le prolongement de chaque canal, des orifices d'expulsion 60 sont percés pour déboucher sur la face externe du fond de l'embout. On observe ainsi une continuité d'une extrémité axiale à l'autre de l'embout entre les canaux et les orifices d'expulsion, qui permet le guidage de l'air comprimé vers l'extrémité des poinçons pour éjecter le chocolat figé autour de l'embout.

Comme cela est particulièrement visible sur la figure 7, le diamètre des canaux et le diamètre des orifices d'expulsion sont ici différents. Il importe selon l'invention que le diamètre des orifices d'expulsion soit très petit, pour ne pas abîmer le chocolat lors de l'expulsion d'air comprimé par ces orifices au moment du démoulage des coquilles. Pour des raisons de facilité d'usinage, le diamètre de ces canaux de distribution est réalisé plus grand que le diamètre des orifices d'expulsion.

Le fluide enfermé dans le tube et le matériau de ce tube formant l'enveloppe du caloduc sont choisis compatibles, afin d'éviter qu'il n'y ait de réactions chimiques entre le fluide et l'enveloppe. A titre d'exemple non limitatif, on pourra choisir de l'éthanol pour le faire circuler en cycle étanche à l'intérieur d'une enveloppe de cuivre ou de tout type d'acier inoxydable.

Tel que décrit précédemment, deux demi-coques forment une bague 36 enserrant la partie centrale du tube, entre les ailettes et l'embout. La bague présente ainsi la forme d'un tube creux de diamètre interne adapté à recouvrir la partie centrale du tube. La bague assure l'isolation thermique du poinçon qu'elle entoure, pour optimiser l'échange thermique. La bague est avantageusement assemblée autour du tube par collage des demi-coques sur le tube.

Comme cela est visible sur les figures 5 et 6, la bague 36 présente une collerette 37 à son extrémité orientée vers l'embout. La collerette permet de recouvrir l'extrémité supérieure de l'embout et elle offre un épaulement pour arrêter en translation le poinçon lors de son insertion dans le support, par butée de la collerette contre le bloc de guidage. La collerette présente une forme extérieure cylindrique avec deux méplats 39 diamétralement opposés.

En outre, la bague présente des formes internes assurant le cheminement de l'air comprimé vers les orifices d'expulsion. A une extrémité, destinée à être orientée vers l'embout, un alésage de plus grand diamètre forme un évidement cylindrique qui s'étend tout autour du tube lorsque la bague est assemblée sur ce tube. Cet évidement forme une chambre de distribution 62 sur tout le pourtour du tube, qui débouche, à la jonction du tube et de l'embout, sur l'ensemble des canaux. Deux entrées d'air 64 diamétralement opposées sont creusées radialement dans la paroi des demi-coques pour déboucher sur la chambre de distribution. On comprendra que l'air comprimé arrive par ces entrées d'air pour passer par la chambre de distribution avant d'être distribué dans chacun des canaux. Les poinçons sont disposés dans les alésages du bloc de guidage de sorte que pour chaque poinçon et son alésage, une entrée d'air 64 communique avec le conduit transversal 65 pour permettre le passage d'air comprimé vers l'intérieur du bloc de guidage. A cet effet, les poinçons sont plaqués les uns contre les autres, chaque poinçon venant en appui au niveau d'un des méplats formés sur sa collerette contre le méplat libre du poinçon déjà en place. On comprendra que le premier poinçon à être placé dans le support prend appui au niveau d'un des ses méplats sur une face plane d'appui interne du support non représentée. On obtient ainsi le bon positionnement angulaire des poinçons pour que les entrées d'air soient bien positionnées, et on obtient également l'espacement souhaité entre les poinçons.

Le circuit de refroidissement 12 est un circuit (figure 2) dans lequel de l'air circule entre une batterie froide 66 du bloc frigorifique pour maintenir l'alimentation en air froid du circuit et le diffuseur du support 16 dans lequel s'étend la partie à ailettes du poinçon. En pratique, les portions du circuit de refroidissement entre la batterie et le diffuseur sont formées respectivement par les gaines souples 30 fixées sur les ouvertures au sommet du diffuseur, les gaines reliant ainsi le support au bloc frigorifique associé au poste de poinçonnage.

Le bloc frigorifique 10 comporte principalement un dispositif ventilateur 68 et la batterie froide 66. Le dispositif ventilateur provoque une circulation d'air passant directement par la batterie froide, de sorte que l'air qui circule en aval de la batterie et en direction du diffuseur est de l'air froid adapté à réaliser un échange thermique avec la partie de l'enceinte à effet caloduc présent dans le diffuseur. Le bloc frigorifique est raccordé de fait au poste de poinçonnage par le circuit de refroidissement. Il peut ainsi être transporté séparément du poste de poinçonnage puis connecté par la mise en place du circuit de refroidissement et la fixation des gaines souples sur le diffuseur. Avantageusement, le bloc frigorifique est rapporté sur le dessus du poste de poinçonnage pour des raisons d'encombrement.

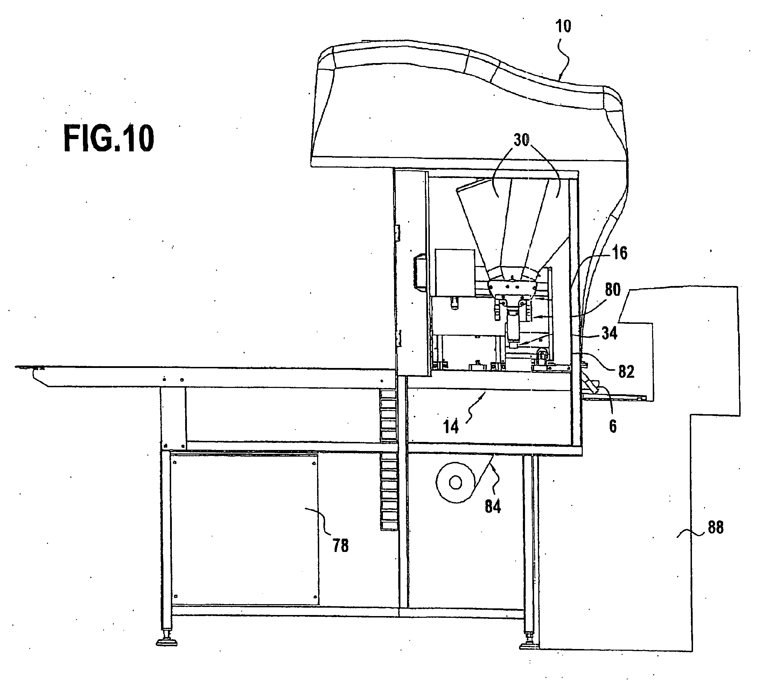

Sur le circuit de refroidissement, un piquage 70 est effectué pour amener de l'air vers un compresseur 72 monté sur un circuit en dérivation d'alimentation en air comprimé. Ce circuit comporte une série de flexibles de raccordement 73 (visibles sur la figure 10) en aval du compresseur et qui sont fixés à leur extrémité opposée au compresseur, au support 16 au niveau des conduits transversaux 65 de manière à ce que l'air comprimé circulant dans un flexible donné débouche dans la chambre de distribution associée réalisée dans la bague décrite précédemment.

On observe ainsi que dans l'installation de moulage selon l'invention, le bloc principal comporte un circuit d'air comprimé, avec de l'air comprimé qui est initialement piqué dans le circuit de refroidissement et qui débouche à proximité des embouts. Ce circuit d'air comprimé est monté en dérivation du circuit de refroidissement, de sorte que l'air qui est amené à passer dans un compresseur avant d'être délivré vers les poinçons pour l'éjection de chocolat est initialement refroidi. On produit ainsi de l'air froid et sec pour souffler sur le chocolat. Ceci présente l'avantage de participer au refroidissement de l'embout par le passage d'air froid dans les canaux de distribution. Ceci présente surtout l'avantage de faire passer dans les orifices d'éjection de l'air sec, puisque la température dans le conduit de refroidissement est plus basse que dans les poinçons, ce qui évite le dépôt d'eau et la formation de glace ultérieure dans ces orifices.

Comme cela est représenté sur le schéma de la figure 2, on prévoit une évacuation d'air 74 par dérivation sur le circuit d'air comprimé. Cette dérivation débouche dans la cabine de travail à proximité du poste de poinçonnage et du tapis, ce qui permet un refroidissement de la cabine et donc des coquilles de chocolat formées et disposées sur le tapis convoyeur, afin qu'elles se tiennent jusqu'à leur remplissage par des moyens de garnissage 76 (figure 1).

Une machine à commande numérique 78 est reliée au poste de poinçonnage de sorte que cette machine permet de commander d'une part un moteur linéaire pour piloter le déplacement vertical de l'ensemble formé par le support, les poinçons, les gaines et le circuit d'air comprimé et d'autre part un vérin pneumatique pour piloter le déplacement horizontal de ce même ensemble.

L'utilisation de gaines souples présente ainsi l'intérêt de ne pas gêner le déplacement dudit ensemble tout en assurant un lien continu entre le bloc frigorifique qui reste fixe et le poste de poinçonnage qui est mobile.

Le poste de poinçonnage comporte également un dispositif de mise en vibration 80 fixé sur le support. Comme cela sera décrit ci-après, la mise en vibration du support qui porte les poinçons permet d'égoutter le chocolat lorsque les poinçons sont retirés de la trémie, pour éviter de perdre du chocolat dans le déplacement ultérieur des poinçons et pour éviter une surépaisseur de chocolat autour de l'embout.

Le poste de poinçonnage comporte en outre un dispositif de découpe 82 qui consiste en un axe monté à rotation sur le bâti et disposé sur le trajet du poinçon depuis la trémie vers le convoyeur. L'axe est ainsi destiné à supprimer l'éventuelle surépaisseur de chocolat resté sur le poinçon.

Le poste de poinçonnage permet d'assurer le déplacement des poinçons depuis une trémie remplie de chocolat dans une tempéreuse vers un tapis convoyeur.

Le tapis convoyeur s'étend transversalement au support et aux poinçons associés. Il se déroule dans le sens de l'éloignement du poste de poinçonnage pour que les coquilles en chocolat éjectées des poinçons sur le tapis soient amenées dans une zone de travail ou l'artisan chocolatier peut les remplir directement sur le tapis sans être gêné par le reste de l'installation de moulage. Avantageusement, du papier alimentaire 84 est entraîné avec le tapis convoyeur de sorte que les coquilles en chocolat reposent sur le papier et non directement sur le tapis. En bout du tapis, il peut être prévu un plateau amovible 86 permettant à l'artisan d'emmener un plateau rempli pour le mettre au frais ou en vitrine tandis qu'un plateau vierge est réinstallé et que l'installation de moulage et le tapis continuent leur cycle.

Enfin, le dispositif pour tempérer comporte un bac de mise à température du chocolat 88 et la trémie, des moyens de raccordement 90 étant disposés entre le bac de mise en température et la trémie pour faire passer le chocolat du bas vers la trémie par un flexible d'alimentation. La trémie présente sensiblement une forme de cuve à parois verticales et la paroi destinée à être orientée vers le bloc de moulage présente en partie supérieure un plan incliné.

Comme cela est visible sur la figure 1, une vanne 92 est montée sur ce flexible pour bloquer ou permettre la circulation de chocolat dans le flexible à destination de la trémie.

La machine à commande numérique est reliée au système de vanne de la tempéreuse pour piloter son ouverture ou sa fermeture selon l'étape du cycle de moulage, comme cela sera décrit ci-après.

On va maintenant décrire l'utilisation de l'installation de moulage.

On dispose le chocolat dans le bac de mise à température de la tempéreuse. On installe sur le support les poinçons correspondant à la forme de la coquille creuse de chocolat souhaitée par l'artisan. Chaque poinçon est inséré par l'ouverture entre les parois de guidage du support et est glissé jusqu'à ce que l'embout entre en butée avec lesdites parois de guidage. Dans cette position de butée, les poinçons sont vissés à leur extrémité sur le noyau du diffuseur. On comprend que des poinçons de forme extérieure différente peuvent être installés côte à côte. On fixe le papier alimentaire sur le convoyeur.

On approche la tempéreuse du bloc principal et on dispose la trémie contre le poste de poinçonnage dans une position active illustrée à la figure 9 par exemple. On relie ensuite la machine à commande numérique à la vanne associée à la tempéreuse.

Dès que le chocolat est à une température déterminée, on remplit la trémie de chocolat en le faisant circuler du bac de mise à température vers la trémie par l'intermédiaire des flexibles de raccordement, et on démarre le cycle de poinçonnage. Ce cycle se répète indéfiniment jusqu'à l'arrêt de la machine, et comporte les étapes suivantes :
- on déplace horizontalement le support portant les poinçons pour l'amener au-dessus de la trémie par l'action d'un vérin pneumatique commandé par la commande numérique ;
- on déplace verticalement le support désormais au-dessus de la trémie pour plonger l'extrémité des poinçons dans le chocolat dans une position de prise. La distance de déplacement vertical du bloc et des poinçons associés est déterminée selon la hauteur d'immersion souhaitée du poinçon dans le chocolat. Ce déplacement vertical est effectué par l'action d'un moteur linéaire ;

- on retire immédiatement le poinçon du chocolat par un déplacement vertical opposé, le temps très court d'immersion du poinçon dans le chocolat ayant suffit pour que le chocolat soit figé autour du poinçon du fait de la différence thermique entre l'embout réfrigéré du poinçon et le chocolat chaud (figure 10) ;
- on commande la mise en vibration du bloc par le dispositif de vibration, lorsque le poinçon est retiré du chocolat, pour évacuer les gouttes pouvant s'écouler sous l'embout ;
- on déplace horizontalement le bloc portant les poinçons pour l'amener au-dessus du convoyeur, par un déplacement pneumatique dans le sens contraire à celui précédemment décrit. Lors de ce déplacement horizontal depuis la trémie en direction du convoyeur, les poinçons passent au-dessus de l'axe en rotation du coupe queue avec l'extrémité inférieure de l'embout qui affleure avec ledit axe, de sorte que la dose de chocolat adhéré sous l'embout est arasée pour qu'elle soit la plus plane possible au moment de la dépose sur le convoyeur ;
- on déplace verticalement le support et les poinçons associés vers le bas jusqu'à ce que les poinçons entrent en contact avec le convoyeur, dans une position de dépose ;
- on maintient les poinçons dans cette position au contact du convoyeur pendant un temps donné visant à refroidir le chocolat pour permettre son éjection ultérieure plus facile ;
- on injecte de l'air comprimé dans le circuit de distribution d'air et on provoque de fait une éjection d'air hors de l'embout par les orifices d'expulsion réalisés dans la face d'extrémité de l'embout ici recouverte de chocolat. Cette éjection d'air provoque la séparation de la coquille de chocolat d'avec l'embout, et donc provoque, la coquille étant en appui sur le tapis du convoyeur, une remonté partielle du poinçon à distance de la coquille restée sur le tapis ;
- on remonte le poinçon en deux mouvements verticaux successifs distincts, un premier mouvement à vitesse lente pour s'assurer du bon démoulage de la coquille puis une remontée plus rapide notamment pour gagner du temps de cycle. L'utilisation d'un moteur linéaire plutôt qu'un actionneur pneumatique pour ce déplacement vertical permet notamment de gérer ces deux vitesses différentes de déplacement ;
- le convoyeur est enfin déplacé axialement pour faire avancer la rangée de coquilles dernièrement déposées et offrir une zone de dépose vierge pour le prochain cycle de poinçonnage. La vitesse de rotation des moyens d'entraînement du convoyeur est calculée pour assurer un écartement déterminé de chaque rangée de coquilles amenées à être déposées sur le tapis à chaque cycle.

Un nouveau cycle peut recommencer en ramenant les poinçons au-dessus puis dans la trémie. On observe que lorsque le poinçon est remonté verticalement pour s'éloigner du convoyeur après que la coquille ait été éjectée sur le tapis du convoyeur, la machine à commande numérique pilote la vanne associée au flexible de raccordement transportant le chocolat depuis le bac de la tempéreuse vers la trémie. La vanne crée un circuit de dérivation qui ramène le chocolat dans le bac de mise en température et ne l'oriente plus vers la trémie. De fait, lorsque le poinçon vient se déposer dans le chocolat, la surface de ce chocolat est plane et n'est pas agitée par l'arrivée du chocolat ce qui permet d'assurer une prise du chocolat autour du poinçon régulière et une hauteur du chocolat figé sur les embouts qui soit droite et répétable. A cet effet également, les poinçons viennent chercher le plus près possible d'un bord de la trémie pour diminuer l'effet du reflux du chocolat contre la paroi de la trémie.

Selon l'invention, ces cycles se répètent alors que de façon répétée et ininterrompue, le fluide à l'intérieur du poinçon formant l'enceinte à effet caloduc est en équilibre entre l'embout et l'extrémité froide. L'embout est ainsi constamment refroidi, que ce soit avant la plongée dans le chocolat, pendant le temps d'immersion dans ce chocolat ou encore pendant le temps de dépose des coquilles sur le tapis par exemple.

Comme cela a été rappelé précédemment, l'important dans ces installations est d'assurer un refroidissement optimal pour améliorer le temps de cycle, qui se prolonge si l'on doit attendre que les poinçons soient à une température suffisamment basse avant de les replonger dans le chocolat tempéré.

L'utilisation selon l'invention d'une enceinte à effet caloduc permet de tirer parti des avantages thermiques de l'effet caloduc et de manière particulièrement avantageuse c'est ici l'utilisation de l'embout comme extrémité chaude du caloduc qui permet un refroidissement efficace des poinçons par rapport au chocolat qui se fige autour.

On a un refroidissement par évaporation qui est différent des refroidissements par contact de l'état de la technique, notamment en ce que le refroidissement selon l'invention ne dépend pas de la vitesse de propagation d'un liquide par exemple. Le brasage du tube et de l'embout, et la forme particulière de la bague entourant le tube permet une diffusion de l'air comprimé, par ailleurs préalablement refroidi, qui n'entrave pas le refroidissement par évaporation.

A titre d'information, le temps de cycle de fabrication de coquilles est de 16 secondes pour des coquilles de chocolat noir et d'environ 18 secondes pour le chocolat blanc ou au lait, qui sont plus lents à cristalliser du fait de la présence de lait. Ceci est un vrai gain par rapport à des installations de la concurrence, dont la durée du cycle peut être de l'ordre d'environ 45 secondes pour du chocolat noir.

L'invention ne saurait toutefois se limiter aux modes de réalisation spécifiquement décrits dans ce document, et s'étend en particulier à tous moyens équivalents et à toute combinaison techniquement opérante de ces moyens.

## Revendications

1. Dispositif de moulage de coquilles creuses par figeage thermique de matière fondue sur au moins un embout (34), dans lequel l'embout est refroidi pour son trempage dans une matière fondue, **caractérisé en ce que** le dispositif comporte un tube (32) auquel l'embout est rendu solidaire, ledit tube et ledit embout formant une enceinte à effet caloduc qui renferme en enceinte close un fluide caloporteur en équilibre entre deux extrémités opposées de l'enceinte formant respectivement évaporateur (46) et condenseur (48) du caloduc, dans lequel l'évaporateur est formé par l'embout à tremper dans la matière fondue.

2. Dispositif selon la revendication 1, **caractérisé en ce que** des ailettes radiales (40) sont disposées en saillie sur la surface extérieure du tube dans la partie d'extrémité de l'enceinte formant condenseur (48), chaque ailette présentant une forme annulaire entourant le tube (32).

3. Dispositif selon la revendication 1 ou 2, **caractérisé en ce que** l'embout (34) comporte une paroi d'extrémité transversale (50) et une paroi latérale circulaire (56) qui délimitent au centre de l'embout un évidemment.

4. Dispositif selon la revendication 3, **caractérisé en ce que** l'évidement est formé par un alésage et un lamage (54) réalisé à proximité du bord débouchant de l'alésage, à l'opposé de la paroi d'extrémité (50), ledit lamage formant un logement apte à recevoir et former épaulement pour l'extrémité du tube (32) sur lequel l'embout (34) est fixé de manière étanche.

5. Dispositif selon la revendication 1, **caractérisé en ce que** ledit embout (34) comporte des canaux de distribution (58) qui sont répartis angulairement de façon régulière dans l'épaisseur de la paroi latérale de l'embout (56), lesdits canaux débouchant sur des orifices d'éjection d'air comprimé (60) du côté de la paroi d'extrémité de l'embout (50).

6. Dispositif selon l'une des revendications précédentes, **caractérisé en ce qu'**une bague dé protection (36) enserre le tube (32), ladite bague comportant des entrées d'air radiales débouchant extérieurement au poinçon à l'air libre et intérieurement dans une chambre de distribution (62) aménagée circulairement dans l'épaisseur du poinçon de sorte que l'extrémité opposée à l'orifice de chaque canal de distribution (58) débouche dans ladite chambre de distribution.

7. Installation de moulage pour l'obtention de coquilles creuses, dans lequel une matrice d'embout est adaptée à passer d'une position de moulage dans un bain de matière fondue, dans laquelle la matière fondue est adaptée à se figer autour de chaque embout (34) par différence thermique, à une position de démoulage dans laquelle la coquille formée autour de chaque embout par figeage thermique est éjectée par de l'air comprime, **caractérisée en ce qu'**elle comporte au moins un dispositif selon l'une des revendications 1 à 6 ainsi qu'un circuit de refroidissement (12) commun à la matrice, et **en ce que** chaque embout forme une extrémité chaude (46) de l'enceinte à effet caloduc du fait du dégagement thermique de la matière fondue qui se fige autour de l'embout, tandis que l'extrémité opposée de l'enceinte à effet caloduc forme l'extrémité froide (48) placée dans le circuit de refroidissement.

8. Installation de moulage selon la revendication 7, **caractérisé en ce que** le dispositif de moulage est fixé à un support (16) comportant un conduit interne (26), qui est partie du circuit de refroidissement (12), et qui reçoit l'extrémité froide (48) de l'enceinte à effet caloduc.

9. Installation de moulage selon la revendication 8, **caractérisé en ce que** le support (16) est relié à un bloc frigorifique (10) par des gaines souples (30) qui permettent le déplacement du support et des poinçons associés par rapport au bloc frigorifique qui reste fixe.

10. Installation de moulage selon l'une des revendications 7 à 9, **caractérisée en ce qu'**un circuit d'air comprimé est monté en dérivation du circuit de refroidissement (12); de sorte que l'air qui est amené à passer dans un compresseur avant d'être délivré vers les dispositifs de moulage pour l'éjection de chocolat est initialement refroidi.

## Claims

1. Device for moulding hollow shells by the thermal setting of molten material on at least one nozzle (34), in which the nozzle is cooled for the purpose of dipping it in a molten material, **characterised in that** said device comprises a tube (32) to which the nozzle is attached, the said tube and the said nozzle forming an enclosure having a heat-pipe effect, which encloses, in the form of a closed enclosure, a heat transfer fluid which is in equilibrium between two opposite ends of the enclosure that form, respectively, the evaporator (46) and condenser (48) of the heat pipe, in which the evaporator is formed by the nozzle which is to be dipped in the molten material.

2. Device according to claim 1, **characterised in that** radial fins (40) are disposed in a projecting manner on the outer surface of the tube in the end part of the enclosure that forms the condenser (48), each fin having an annular shape that surrounds the tube (32).

3. Device according to claim 1 or 2, **characterised in that** the nozzle (34) comprises a transverse end wall (50) and a circular side wall (56) which delimit a cavity in the centre of the nozzle.

4. Device according to claim 3, **characterised in that** the cavity is formed by a bore and a counter-bore (54), which is produced close to the outlet edge of said bore, opposite the end wall (50), the said counter-bore forming a housing which is capable of receiving, and forming a shoulder for, the end of the tube (32) on which the nozzle (34) is fixed in a leakproof manner.

5. Device according to claim 1, **characterised in that** the said nozzle (34) comprises distribution ducts (58) which are distributed angularly in a regular manner within the thickness of the side wall (56) of the nozzle, the said ducts opening onto orifices (60) for ejecting compressed air on the end wall (50) of the nozzle.

6. Device according to one of the preceding claims, **characterised in that** a protective ring (36) encompasses the tube (32), the said ring comprising radial air inlets which open, outside the plunger, into the open air and, internally, into a distribution chamber (62) which is arranged circularly within the thickness of the plunger, in such a way that the end opposite the orifice of each distribution duct (58) opens into the said distribution chamber.

7. Moulding installation for obtaining hollow shells, in which a nozzle die is adapted to pass from a moulding position within a bath of molten material, in which said molten material is adapted to set around each nozzle (34) as a result of the difference in heat, to a de-moulding position in which the shell formed around each nozzle as a result of thermal setting is ejected by compressed air, **characterised in that** said installation comprises at least one device according to one of claims 1 to 6, as well as a cooling circuit (12) which is common to the die, and **in that** each nozzle forms a hot end (46) of the enclosure having a heat-pipe effect, because of the thermal disengagement of the molten material which sets around the nozzle, while the opposite end of the enclosure having a heat-pipe effect forms the cold end (48) which is located within the cooling circuit.

8. Moulding installation according to claim 7, **characterised in that** the moulding device is fixed to a support (16) comprising an internal conduit (26) which is part of the cooling circuit (12) and which receives the cold end (48) of the enclosure having a heat-pipe effect.

9. Moulding installation according to claim 8, **characterised in that** the support (16) is connected to a refrigerating unit (10) by flexible casings (30) which permit displacement of the support and of the associated plungers in relation to the refrigerating unit which remains fixed.

10. Moulding installation according to one of claims 7 to 9, **characterised in that** a compressed air circuit is branched off from the cooling circuit (12), in such a way that the air which is caused to pass into a compressor before being delivered to the moulding devices for ejecting chocolate is initially cooled.

## Patentansprüche

1. Vorrichtung zum Formen von Hohlschalen durch thermisches Erstarren von geschmolzener Masse an mindestens einem Endstück (34), bei der das Endstück beim Eintauchen in eine geschmolzene Masse gekühlt wird, **dadurch gekennzeichnet, dass** die Vorrichtung ein Rohr (32) aufweist, mit dem das Endstück fest verbunden ist, wobei das Rohr und das Endstück einen Raum mit Wärmerohreffekt bilden, der ein Kältemittel räumlich geschlossen im Gleichgewicht zwischen zwei entgegengesetzten Enden des Raumes umschließt, die einen Verdampfer (46) bzw. Verflüssiger (48) des Wärmerohrs bilden, wobei der Verdampfer durch das in die geschmolzene Masse einzutauchende Endstück gebildet wird.

2. Vorrichtung nach Anspruch 1, **dadurch gekennzeichnet, dass** radiale Lamellen (40) vorspringend an der Außenoberfläche des Rohrs im Endteil des den Verflüssiger (48) bildenden Raums angeordnet sind, wobei jede das Rohr (32) umgebende Lamelle ringförmig ausgebildet ist.

3. Vorrichtung nach Anspruch 1 oder 2, **dadurch gekennzeichnet, dass** das Endstück (34) eine quer verlaufende Endwand (50) und eine kreisförmige Seitenwand (56) aufweist, die in der Mitte des Endstücks eine Aussparung begrenzen.

4. Vorrichtung nach Anspruch 3, **dadurch gekennzeichnet, dass** die Aussparung durch eine Bohrung und eine Senkung (54) in der Nähe des einmündenden Randes der Bohrung gegenüber der Endwand (50) gebildet wird, wobei die Senkung eine Aufnahme bildet, die geeignet ist, einen Anschlag für das Ende des Rohrs (32) zu bilden, an dem das Endstück (34) fluiddicht befestigt ist, und das Ende aufzunehmen.

5. Vorrichtung nach Anspruch 1, **dadurch gekennzeichnet, dass** das Endstück (34) Verteilungskanäle (58) aufweist, die auf gleichförmige Weise winklig in der Dicke der Seitenwand des Endstücks (56) angeordnet sind, wobei die Kanäle in Ausstoßöffnungen für Druckluft (60) auf der Seite der Endwand des Endstücks (50) münden.

6. Vorrichtung nach einem der vorhergehenden Ansprüche, **dadurch gekennzeichnet, dass** ein Schutzring (36) das Rohr (32) umschließt, wobei der Ring radiale Lufteinlässe aufweist, die außen am Stempel ins Freie und innen in eine Verteilungskammer (62) münden, die kreisförmig in der Dicke des Stempels angeordnet ist, so dass das der Öffnung jedes Verteilungskanals (58) gegenüberliegende Ende in die Verteilungskammer mündet.

7. Anlage zum Formen zum Erhalten von Hohlschalen, bei der eine Endstückmatritze geeignet ist, aus einer Formposition in einem Bad mit geschmolzener Masse, in dem die geschmolzene Masse um jedes Endstück (34) herum durch thermische Differenz zu erstarren in der Lage ist, in eine Entformposition überzugehen, in der die um jedes Endstück durch thermisches Erstarren gebildete Hohlschale mit Druckluft ausgestoßen wird, **dadurch gekennzeichnet, dass** sie mindestens eine Vorrichtung nach einem der Ansprüche 1 bis 6 sowie einen mit der Matrize gemeinsamen Kühlkreis (12) aufweist und dass jedes Endstück aufgrund der Wärmeabgabe der geschmolzenen Masse, die um das Endstück herum erstarrt, ein warmes Ende (46) des Raums mit Wärmerohreffekt bildet, während das entgegengesetzte Ende des Raums mit Wärmerohreffekt das im Kühlkreis angeordnete kalte Ende (48) bildet.

8. Anlage zum Formen nach Anspruch 7, **dadurch gekennzeichnet, dass** die Vorrichtung zum Formen an einer Halterung (16) befestigt ist, die eine innere Leitung (26) aufweist, die Teil des Kühlkreises (12) ist und die das kalte Ende (48) des Raums mit Wärmerohreffekt aufnimmt.

9. Anlage zum Formen nach Anspruch 8, **dadurch gekennzeichnet, dass** die Halterung (16) mit einem Kälteaggregat (10) über Schläuche (30) verbunden ist, die ein Bewegen der Halterung und der zugehörigen Stempel in Bezug auf das feststehende Kälteaggregat ermöglichen.

10. Anlage zum Formen nach einem der Ansprüche 7 bis 9, **dadurch gekennzeichnet, dass** ein Druckluftkreis abzweigend vom Kühlkreis (12) angebracht ist, so dass die Luft, die in einen Verdichter eintreten muss, bevor sie zum Ausstoßen der Schokolade an die Vorrichtungen zum Formen abgegeben wird, vorab gekühlt wird.
